# FASCICULE DE BREVET EUROPEEN

(11) **EP 3 890 565 B1**
(45) Date de publication et mention de la délivrance du brevet: **07.06.2023**
(21) Numéro de dépôt: 19813545.1
(22) Date de dépôt: 05.12.2019
(51) Int. Cl.: A47J 27/04

(54) **ACCESSOIRE CUISEUR VAPEUR AVEC BOUCHON AMOVIBLE**
DAMPFKOCHER-ZUBEHÖR MIT ABNEHMBAREM STECKER
STEAM COOKER ACCESSORY WITH REMOVABLE PLUG

(30) Priorité: 07.12.2018 FR 1872523
(43) Date de publication de la demande: 13.10.2021
(73) Titulaire: SEB S.A., 69130 Ecully (FR)
(72) Inventeur: ALLEMAND, Bernard, 70100 VELESMES ECHEVANNE (FR)
(74) Mandataire: SEB Développement
(86) Numéro de dépôt international: PCT/EP2019/083886
(87) Numéro de publication internationale: WO 2020/115242

(56) Documents cités:
- FR-A1- 2 846 216
- FR-A1- 2 846 217
- FR-A1- 2 980 348
- FR-A1- 3 051 647
- FR-B1- 2 846 217
- FR-B1- 3 051 647
- US-A- 5 097 753

## Description

### Domaine technique

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

### Technique antérieure

Il est connu, du document FR 3 051 647 81 déposé par la demanderesse, un accessoire cuiseur vapeur pour chauffer et/ou cuire à la vapeur des aliments contenus dans un récipient. L'accessoire cuiseur vapeur comprend une enceinte présentant une paroi latérale extérieure et une paroi de fond. L'accessoire cuiseur vapeur comprend un générateur de vapeur configuré pour alimenter l'enceinte en vapeur. Le générateur de vapeur présente une chambre de production de vapeur reliée à une sortie de distribution de vapeur ménagée dans une partie inférieure du générateur de vapeur. L'enceinte comporte un réservoir d'eau entourant et alimentant en eau la chambre de production de vapeur par une entrée d'alimentation d'eau. La chambre de production de vapeur communique avec une sortie d'évacuation de vapeur disposée plus haut que l'entrée d'alimentation d'eau. La chambre de production de vapeur comporte un dispositif de chauffe. L'enceinte comporte une première paroi latérale entourant le dispositif de chauffe et délimitant au moins partiellement la chambre de production de vapeur.

Lorsque l'eau versée dans le réservoir d'eau est chargée en magnésium et en calcium, il est très probable que du tartre se forme et s'accumule dans la chambre de production de vapeur après plusieurs utilisations, ce qui a pour conséquence d'encrasser en tartre le dispositif de chauffe et d'altérer la capacité de chauffe du générateur de vapeur. Cependant, un tel accessoire cuiseur vapeur présente l'inconvénient d'avoir une construction de générateur de vapeur difficilement accessible pour le nettoyage, en particulier le détartrage.

### Exposé de l'invention

Un objet de la présente invention est de proposer un accessoire cuiseur vapeur utilisé avec un récipient pour chauffer et/ou cuire des aliments à la vapeur, pour lequel le nettoyage est facile et aisé.

Un autre objet de la présente invention est de proposer un accessoire cuiseur vapeur utilisé avec un récipient pour chauffer et/ou cuire des aliments à la vapeur, qui présente de bonnes performances de production de vapeur.

Un autre objet de la présente invention est de proposer un cuiseur vapeur électrique pour chauffer et/ou cuire des aliments à la vapeur comportant un récipient et un accessoire cuiseur vapeur, pour lequel le nettoyage est facile et aisé.

Un autre objet de la présente invention est de proposer un cuiseur vapeur électrique pour chauffer et/ou cuire des aliments à la vapeur comportant un récipient et un accessoire cuiseur vapeur, qui présente de bonnes performances de production de vapeur.

### Résumé de l'invention

Ces objets sont atteints avec un accessoire cuiseur vapeur pour chauffer et/ou cuire à la vapeur des aliments contenus dans un récipient selon la revendication 1.

Par amovible, on comprend que la première paroi latérale peut être démontée sans faire appel à un outil.

Ainsi, l'eau versée dans le réservoir d'eau peut atteindre librement la chambre de production de vapeur via l'entrée d'alimentation d'eau. L'eau atteignant la chambre de production de vapeur est ensuite chauffée par le dispositif de chauffe et transformée en vapeur. Le tartre se forme dans la chambre de production de vapeur après plusieurs utilisations. Le fait que la première paroi latérale soit montée amovible par rapport au dispositif de chauffe permet à l'utilisateur de détacher la première paroi latérale de l'enceinte et d'accéder facilement à la chambre de production de vapeur pour le nettoyage.

Cette disposition présente une construction économique et simple à mettre en oeuvre.

Avantageusement, la première paroi latérale est portée par un bouchon qui est maintenu sur la paroi de fond par une liaison à baïonnette. Cette disposition présente l'avantage d'avoir une attache rapide et facile de la première paroi latérale sur la paroi de fond. L'accouplement de type baïonnette est à la fois sûr et efficace.

Avantageusement, l'enceinte comporte une deuxième paroi latérale entourant la première paroi latérale à distance de la paroi latérale extérieure, la deuxième paroi latérale étant portée par le bouchon. Ainsi, la deuxième paroi latérale forme une barrière thermique entre la première paroi latérale et la paroi latérale extérieure pour que l'échauffement du réservoir d'eau en dehors de la chambre de production de vapeur soit limité. La température de la paroi latérale extérieure de l'enceinte est donc limitée. Le volume d'eau en chauffe pour la production de vapeur est davantage réduit grâce à la présence de la deuxième paroi latérale. Le temps de montée en température de l'eau est ainsi réduit. Ce générateur de vapeur présente de bonnes performances de production de vapeur.

Avantageusement, la deuxième paroi latérale est montée amovible par rapport au bouchon. Cette disposition facilite le nettoyage de la deuxième paroi latérale.

Par amovible, on comprend que la deuxième paroi latérale peut être démontée sans faire appel à un outil.

Avantageusement, la sortie d'évacuation de vapeur communique par un conduit avec la sortie de distribution de vapeur, la première paroi latérale s'étendant entre le dispositif de chauffe et le conduit, et la deuxième paroi latérale entoure le conduit. Ainsi, la vapeur produite dans la chambre de production de vapeur s'élève pour atteindre la sortie d'évacuation de vapeur, puis traverse le conduit pour atteindre la sortie de distribution de vapeur. Cette disposition permet de présenter un conduit disposé près de la chambre de production de vapeur, facilitant le cheminement de vapeur. Cette disposition présente également une construction compacte et simple à mettre en oeuvre.

Avantageusement, l'enceinte comporte une troisième paroi latérale entourant la deuxième paroi latérale, et la troisième paroi latérale ménage une ouverture d'alimentation d'eau reliant le réservoir d'eau et la chambre de production de vapeur. Ainsi, cette troisième paroi latérale limite davantage l'échauffement du réservoir d'eau en dehors de la chambre de production de vapeur. Cette disposition permet également d'habiller la deuxième paroi latérale pour éviter que le générateur de vapeur soit exposé à l'extérieur.

Avantageusement, la première paroi latérale et la troisième paroi latérale sont réalisées en une seule pièce. Cette disposition permet d'obtenir une construction simple à mettre en oeuvre.

Avantageusement, la chambre de production de vapeur est délimitée en hauteur par une paroi centrale supérieure reliée à la première paroi latérale. Cette disposition présente l'avantage de limiter l'espace de la chambre de production de vapeur, permettant d'accélérer la saturation en vapeur de la chambre de production de vapeur.

Avantageusement, le réservoir d'eau présente un fond déversant vers l'entrée d'alimentation d'eau, le fond étant formé par la paroi de fond. Cette disposition permet une meilleure utilisation du volume du réservoir d'eau. Avantageusement, l'enceinte comporte un organe de positionnement s'étendant depuis la deuxième paroi latérale et coopérant avec un organe de blocage disposé sur le fond du réservoir d'eau. Cette disposition permet de faciliter l'assemblage du bouchon dans l'enceinte.

Avantageusement, l'accessoire cuiseur vapeur comporte un couvercle amovible délimitant au moins une partie de l'enceinte et mobile entre une position ouverte de l'enceinte et une position fermée de l'enceinte. Cette disposition permet à l'utilisateur d'accéder à l'intérieur de l'enceinte pour le nettoyage, ainsi que pour le remplissage de l'eau dans le réservoir d'eau.

Ces objets sont également atteints avec un cuiseur vapeur électrique selon la revendication 12.

### Brève description des dessins

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 illustre une vue en perspective éclatée d'un cuiseur vapeur électrique comportant un accessoire cuiseur vapeur et un récipient selon un mode particulier de réalisation de l'invention ;
La figure 2 illustre une vue en coupe de l'accessoire cuiseur vapeur illustré sur la figure 1, selon une ligne de coupe II-II ;
La figure 3 illustre une vue en coupe de l'accessoire cuiseur vapeur illustré sur la figure 1, selon une ligne de coupe III-III perpendiculaire à la ligne de coupe II-II ;
La figure 4 illustre une vue en perspective d'un bouchon de l'accessoire cuiseur vapeur illustré sur la figure 1 ;

### Description des modes de réalisation

Seuls les éléments nécessaires à la compréhension de l'invention ont été représentés. Pour faciliter la lecture des dessins, les mêmes éléments portent les mêmes références d'une figure à l'autre.

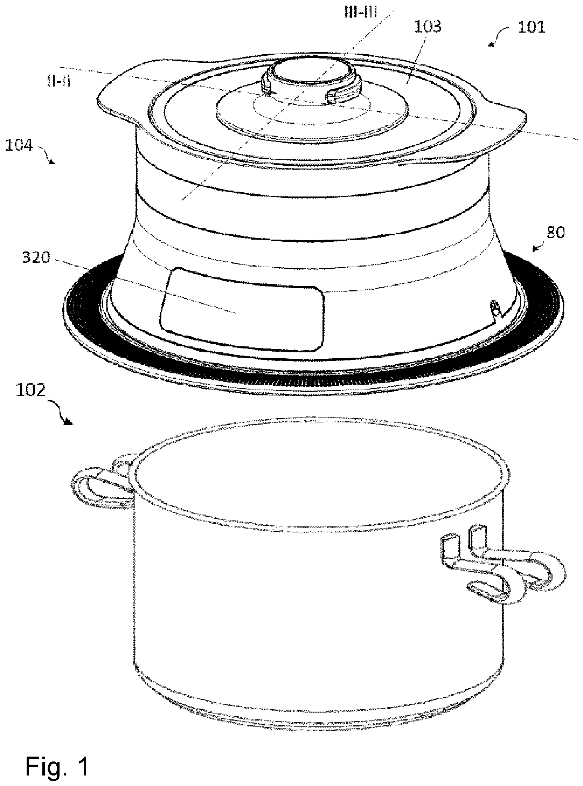

Le cuiseur vapeur électrique 101 illustré de manière schématique sur la figure 1 est un appareil pour chauffer et/ou cuire à la vapeur des aliments, comportant un récipient 102 pour contenir les aliments à chauffer et/ou à cuire, et un accessoire cuiseur vapeur 104 prévu pour reposer sur le récipient 102. A cet effet, l'accessoire 104 présente une face inférieure 81 prévue pour être disposée sur le récipient 102.

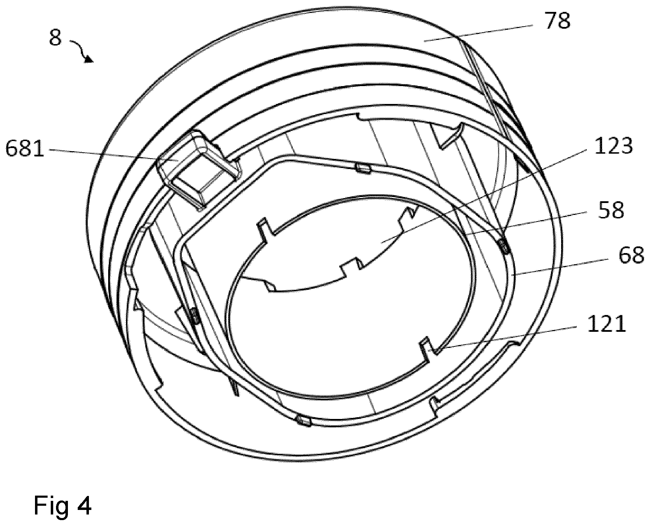

Plus particulièrement dans l'exemple de réalisation illustré sur les figures 1 à 4, l'accessoire cuiseur vapeur 104 est configuré pour chauffer et/ou cuire à la vapeur des aliments contenus dans le récipient 102. L'accessoire cuiseur vapeur 104 comporte un dispositif de support 80 prévu pour porter l'accessoire cuiseur vapeur 104, et pour reposer sur le récipient 102. La face inférieure 81 appartient au dispositif de support 80. A titre de variante, le dispositif de support 80 est monté amovible sur l'accessoire cuiseur vapeur 104.

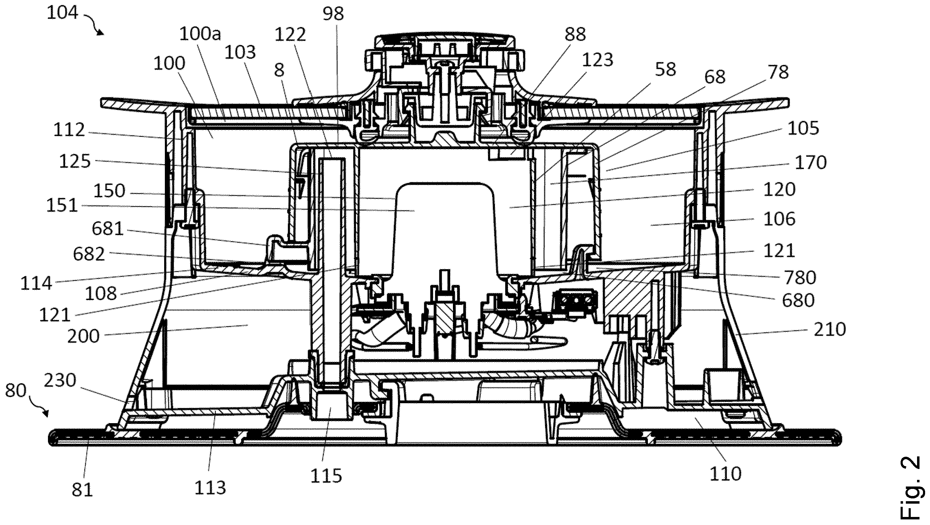

L'accessoire cuiseur vapeur 104 comprend une enceinte 100 présentant une paroi latérale extérieure 112 et une paroi de fond 114. L'enceinte 100 comporte un réservoir d'eau 106 délimité par la paroi latérale extérieure 112 et la paroi de fond 114. Le réservoir d'eau 106 communique avec l'extérieur par une ouverture supérieure 100a de l'enceinte 100. Tel que représenté sur la figure 2, l'accessoire cuiseur vapeur 104 comporte un couvercle 103 amovible qui ferme l'enceinte 100 au niveau de son ouverture supérieure 100a. Le couvercle 103 est mobile entre une position ouverte de l'enceinte 100 où le réservoir d'eau 106 est accessible depuis l'extérieur pour le remplissage d'eau et une position fermée de l'enceinte 100.

L'enceinte 100 comporte partiellement un générateur de vapeur 105 présentant une chambre de production de vapeur 120. Le réservoir d'eau 106 alimente en eau la chambre de production de vapeur 120 par gravité. A cet effet le réservoir d'eau 106 communique par une entrée d'alimentation d'eau 121 avec la chambre de production de vapeur 120. Dans l'exemple de réalisation illustré sur la figure 2, le réservoir d'eau 106 communique avec la chambre de production de vapeur 120 par deux entrées d'alimentation d'eau 121.

De préférence, le réservoir d'eau 106 présente un fond 108 déversant vers les deux entrées d'alimentation d'eau 121. Le fond 108 est formé par la paroi de fond 114 de l'enceinte 100.

Conformément aux figures 2 à 3, le réservoir d'eau 106 entoure la chambre de production de vapeur 120. A cet effet, l'enceinte 100 comporte une première paroi latérale 58 entourant la chambre de production de vapeur 120. Les deux entrées d'alimentation d'eau 121, mieux visibles sur la figure 2, forment chacune une échancrure inférieure au rebord inférieur de la première paroi latérale 58. Les deux entrées d'alimentation d'eau 121 sont disposées à l'opposé l'une de l'autre. Plus particulièrement, chaque entrée d'alimentation d'eau 121 présente une section de passage d'eau inférieure ou égale à 25 mm², de préférence inférieure ou égale à 20 mm². De préférence, la première paroi latérale 58 forme un tube de section sensiblement circulaire.

Tel que visible sur la figure 2, la chambre de production de vapeur 120 est délimitée en hauteur par une paroi centrale supérieure 88 reliée à la première paroi latérale 58. La première paroi latérale 58 s'étend depuis la paroi centrale supérieure 88 jusqu'au fond 108 du réservoir d'eau 106.

La chambre de production de vapeur 120 comporte un dispositif de chauffe 150 pour transformer en vapeur l'eau présente dans la chambre de production de vapeur 120. Dans l'exemple de réalisation illustré sur les figures 2 à 3, le dispositif de chauffe 150 comprend un plot chauffant 151. Selon un autre mode particulier de réalisation de l'invention, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120.

La chambre de production de vapeur 120 est reliée à une sortie de distribution de vapeur 115 ménagée dans une partie inférieure 110 du générateur de vapeur 105. A cet effet, la chambre de production de vapeur 120 communique avec une sortie d'évacuation de vapeur 122 disposée plus haut que l'entrée d'alimentation d'eau 121. La sortie d'évacuation de vapeur 122 communique par un conduit 125 avec la sortie de distribution de vapeur 115.

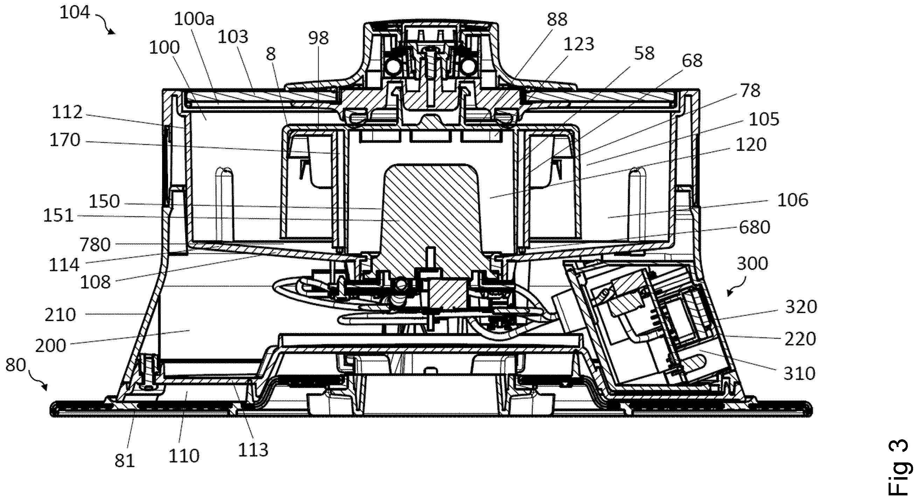

La chambre de production de vapeur 120 communique avec la sortie d'évacuation de vapeur 122 par une chambre de diffusion de vapeur 170 disposée autour de la chambre de production de vapeur 120. La chambre de production de vapeur 120 communique avec la chambre de diffusion de vapeur 170 par au moins une ouverture d'échappement de vapeur 123 formée par la première paroi latérale 58. Dans l'exemple de réalisation illustrée sur la figure 3, la première paroi latérale 58 présente trois ouvertures d'échappement de vapeur 123 formant chacune une échancrure supérieure et disposées côte à côte dans le rebord supérieur de la première paroi latérale 58.

Le conduit 125 est disposé à l'intérieur de la chambre de diffusion de vapeur 170. Plus particulièrement, le conduit 125 est vertical. A titre de variante le conduit 125 peut être descendant sans nécessairement être vertical. De préférence le conduit 125 est dépourvu de chicanes. En d'autres termes, le conduit 125 est descendant de manière continue, sans nécessairement être rectiligne.

Le générateur de vapeur 105 présente une paroi inférieure 113 dans laquelle est formée la sortie de distribution de vapeur 115. La chambre de production de vapeur 120 est agencée dans le générateur de vapeur 105 à distance de la paroi inférieure 113.

L'accessoire cuiseur vapeur 104 comprend un compartiment technique 200 agencé en dessous de l'enceinte 100 et situé entre la paroi de fond 114 de l'enceinte 100 et la paroi inférieure 113. Tel que visible aux figures 2 à 3, le compartiment technique 200 présente une paroi annulaire extérieure 210 s'étendant depuis une partie de col cylindrique relativement étroite vers une extrémité inférieure relativement large. L'accessoire cuiseur vapeur 104 comporte un dispositif de commande et d'affichage 300 disposé dans le compartiment technique 200. Tel qu'illustré à la figure 3, le dispositif de commande et d'affichage 300 comporte un boîtier électronique de commande 310 présentant un écran de commande et d'affichage 320 qui est visible sur une face extérieure 220 de la paroi annulaire extérieure 210. Plus particulièrement, le dispositif de commande et d'affichage 300 est disposé à l'intérieur du compartiment technique 200 de manière hermétique et étanche, ce qui permet à la fois de garantir l'étanchéité des composants électroniques à l'intérieur du dispositif de commande et d'affichage 300 et d'éviter la condensation d'eau sur l'écran de commande et d'affichage 320.

De préférence, la paroi inférieure 113 est assemblée avec la paroi annulaire extérieure 210 et la paroi de fond 114, par exemple par vissage, par soudage, par clipsage ou par surmoulage.

Dans l'exemple de réalisation illustré sur la figure 2, l'accessoire cuiseur vapeur 104 comporte une sortie d'évacuation d'eau 230 ménagée entre la paroi annulaire extérieure 210 et la paroi inférieure 113 et mettant en communication l'intérieur du compartiment technique 200 et l'extérieur de l'accessoire cuiseur vapeur 104. La présence d'une telle sortie d'évacuation d'eau 230 permet d'évacuer de l'eau présente dans le compartiment technique 200 en cas de fuite d'eau dans l'enceinte 100. Avantageusement, la paroi inférieure 113 déverse vers la sortie d'évacuation d'eau 230.

La première paroi latérale 58 est montée amovible par rapport au dispositif de chauffe 150. Conformément aux figures 2 à 3, la paroi centrale supérieure 88 et la première paroi latérale 58 sont formées par un bouchon 8 entourant le dispositif de chauffe 150. Le bouchon 8 est mobile en rotation entre une position verrouillée dans laquelle la première paroi latérale 58 est immobile par rapport au dispositif de chauffe 150, et une position déverrouillée dans laquelle la première paroi latérale 58 peut être séparée du dispositif de chauffe 150. Plus particulièrement, Le bouchon 8 est maintenu sur la paroi de fond 114 par une liaison à baïonnette.

Tel que visible aux figures 2 à 3, l'enceinte 100 comporte une deuxième paroi latérale 68 entourant la première paroi latérale 58 à distance de la paroi latérale extérieure 112. La deuxième paroi latérale 68 est portée par le bouchon 8. La deuxième paroi latérale 68 ménage un passage d'alimentation d'eau 680 reliant le réservoir d'eau 106 et la chambre de production de vapeur 120. Le passage d'alimentation d'eau 680 est formé entre la deuxième paroi latérale 68 et le fond 108 du réservoir d'eau 106. Plus particulièrement, la deuxième paroi latérale 68 entoure le conduit 125. La première paroi latérale 58 s'étend entre le dispositif de chauffe 150 et le conduit 125. De préférence, la deuxième paroi latérale 68 forme un tube de section sensiblement elliptique. A titre de variante, la deuxième paroi latérale 68 est montée amovible par rapport au bouchon 8 pour faciliter le nettoyage du bouchon 8.

La chambre de diffusion de vapeur 170 est délimitée radialement entre la première paroi latérale 58 et la deuxième paroi latérale 68. La chambre de diffusion de vapeur 170 est fermée dans sa partie supérieure par une paroi intermédiaire supérieure 98. Avantageusement, la paroi intermédiaire supérieure 98 est formée par le bouchon 8 et est reliée à la paroi centrale supérieure 88.

Le bouchon 8 comporte une troisième paroi latérale 78 entourant la deuxième paroi latérale 68 et reliée à la paroi intermédiaire supérieure 98. La troisième paroi latérale 78 ménage une ouverture d'alimentation d'eau 780 reliant le réservoir d'eau 106 et la chambre de production de vapeur 120. De préférence, la troisième paroi latérale 78 forme un tube de section sensiblement circulaire.

Avantageusement, la deuxième paroi latérale 68 est pivotante par rapport au bouchon 8. Tel que visible à la figure 2, l'enceinte 100 comporte un organe de positionnement 681 s'étendant depuis la deuxième paroi latérale 68 au-delà de la troisième paroi latérale 78. Lorsque le bouchon 8 est disposé dans l'enceinte 100, l'organe de positionnement 681 coopère avec un organe de blocage 682 disposé sur le fond 108 du réservoir d'eau 106 de manière à bloquer la rotation de la deuxième paroi latérale 68 dans l'enceinte 100.

Le cuiseur vapeur électrique 101 illustré sur la figure 1 et l'accessoire cuiseur vapeur 104 illustré sur les figures 1 à 4 fonctionnent et s'utilisent de la manière suivante.

L'utilisateur dispose l'accessoire cuiseur vapeur 104 sur le récipient 102 après avoir disposé les aliments dans le récipient 102. L'utilisateur enlève le couvercle 103 et remplit le réservoir d'eau 106 par l'ouverture supérieure 100a de l'enceinte 100. L'eau s'écoule par les deux entrées d'alimentation d'eau 121 dans la chambre de production de vapeur 120. De préférence, l'utilisateur remplit le réservoir d'eau 106 jusqu'à un niveau suffisamment inférieur à la sortie d'évacuation de vapeur 122, pour éviter que l'eau atteigne la sortie d'évacuation de vapeur 122 et s'écoule par le conduit 125. L'utilisateur met alors en marche le dispositif de chauffe 150 en appuyant sur l'écran de commande et d'affichage 320. La température de l'eau présente dans la chambre de production de vapeur 120 s'élève jusqu'à ce que de la vapeur soit produite. La vapeur produite dans la chambre de production de vapeur 120 traverse les trois ouvertures d'échappement de vapeur 123 pour atteindre la chambre de diffusion de vapeur 170. La vapeur est alors confinée par la première paroi latérale 58, par la deuxième paroi latérale 68, par la paroi intermédiaire supérieure 98 et par l'eau présente dans la chambre de diffusion de vapeur 170. La vapeur s'échappe alors par la sortie d'évacuation de vapeur 122 pour atteindre la sortie de distribution de vapeur 115 en descendant par le conduit 125. La vapeur sortant de la sortie de distribution de vapeur 115 se répand dans le récipient 102 pour chauffer et/ou cuire les aliments.

Après plusieurs séances d'utilisation, le tartre se forme et s'accumule dans l'enceinte 100, notamment dans la chambre de production de vapeur 120. L'utilisateur enlève le couvercle 103 et tourne le bouchon 8 dans le sens contraire des aiguilles d'une montre pour faire passer le bouchon 8 depuis sa position verrouillée à sa position déverrouillée dans laquelle le bouchon 8 peut être retiré de l'accessoire cuiseur vapeur 104. Ensuite l'utilisateur retire le bouchon 8 et le nettoie avec des produits de détartrage. Le dispositif de chauffe 150 et le fond 108 du réservoir d'eau 106 sont également accessibles pour le nettoyage. Après le nettoyage, l'utilisateur dispose le bouchon 8 dans l'enceinte 100 en positionnant l'organe de positionnement 681 dans l'organe de blocage 682. Puis l'utilisateur tourne le bouchon 8 dans le sens des aiguilles d'une montre pour faire passer le bouchon 8 depuis sa position déverrouillée à sa position verrouillée. Bien entendu, l'invention n'est nullement limitée au mode de réalisation précédemment décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, tel que défini par les revendications.

Dans une variante de réalisation de l'invention non représentée, la première paroi latérale 58 et la deuxième paroi latérale 68 ne sont pas réalisées par une seule pièce. La première paroi latérale 58 est portée par une pièce qui est différente du bouchon 8 comportant lui-même la deuxième paroi latérale 68. La première paroi latérale 68 est maintenue sur la paroi de fond 114 par une liaison à baïonnette. Dans une variante de réalisation de l'invention non représentée, le bouchon 8 portant la première paroi latérale 58 est assemblé sur la paroi de fond 114 de l'enceinte 100 par vissage ou par clippage.

Dans une variante de réalisation de l'invention non représentée, la chambre de production de vapeur 120 communique avec plusieurs sorties d'évacuation de vapeur 122 disposées plus haut que l'entrée d'alimentation d'eau 121 et communiquant par plusieurs conduits 125 avec plusieurs sorties de distribution de vapeur 115.

## Revendications

1. Accessoire cuiseur vapeur (104) pour chauffer et/ou cuire à la vapeur des aliments contenus dans un récipient (102), l'accessoire cuiseur vapeur (104) comprenant une enceinte (100) présentant une paroi latérale extérieure (112) et une paroi de fond (114), un générateur de vapeur (105) configuré pour alimenter l'enceinte (100) en vapeur, le générateur de vapeur (105) présentant une chambre de production de vapeur (120) reliée à une sortie de distribution de vapeur (115) ménagée dans une partie inférieure (110) du générateur de vapeur (105), l'enceinte (100) comportant un réservoir d'eau (106) entourant et alimentant en eau la chambre de production de vapeur (120) par au moins une entrée d'alimentation d'eau (121), la chambre de production de vapeur (120) communiquant avec une sortie d'évacuation de vapeur (122) disposée plus haut que l'entrée d'alimentation d'eau (121), la chambre de production de vapeur (120) comportant un dispositif de chauffe (150), l'enceinte (100) comportant une première paroi latérale (58) entourant le dispositif de chauffe (150) et délimitant au moins partiellement la chambre de production de vapeur (120), **caractérisé en ce que** la première paroi latérale (58) est montée amovible par rapport au dispositif de chauffe (150) et **en ce que** la première paroi latérale (58) est mobile en rotation entre une position verrouillée dans laquelle la première paroi latérale (58) est immobile par rapport au dispositif de chauffe (150), et une position déverrouillée dans laquelle la première paroi latérale (58) peut être séparée du dispositif de chauffe (150).

2. Accessoire cuiseur vapeur (104) selon la revendication 1, **caractérisé en ce que** la première paroi latérale (58) est portée par un bouchon (8) qui est maintenu sur la paroi de fond (114) par une liaison à baïonnette.

3. Accessoire cuiseur vapeur (104) selon la revendication 2, **caractérisé en ce que** l'enceinte (100) comporte une deuxième paroi latérale (68) entourant la première paroi latérale (58) à distance de la paroi latérale extérieure (112), la deuxième paroi latérale (68) étant portée par le bouchon (8).

4. Accessoire cuiseur vapeur (104) selon la revendication 3, **caractérisé en ce que** la deuxième paroi latérale (68) est montée amovible par rapport au bouchon (8).

5. Accessoire cuiseur vapeur (104) selon l'une des revendications 3 à 4, **caractérisé en ce que** la sortie d'évacuation de vapeur (122) communique par un conduit (125) avec la sortie de distribution de vapeur (115), la première paroi latérale (58) s'étendant entre le dispositif de chauffe (150) et le conduit (125), et **en ce que** la deuxième paroi latérale (68) entoure le conduit (125).

6. Accessoire cuiseur vapeur (104) selon l'une des revendications 3 à 5, **caractérisé en ce que** l'enceinte (100) comporte une troisième paroi latérale (78) entourant la deuxième paroi latérale (68), et **en ce que** la troisième paroi latérale (78) ménage une ouverture d'alimentation d'eau (780) reliant le réservoir d'eau (106) et la chambre de production de vapeur (120).

7. Accessoire cuiseur vapeur (104) selon la revendication 6, **caractérisé en ce que** la première paroi latérale (58) et la troisième paroi latérale (78) sont réalisées en une seule pièce.

8. Accessoire cuiseur vapeur (104) selon l'une des revendications 1 à 7, **caractérisé en ce que** la chambre de production de vapeur (120) est délimitée en hauteur par une paroi centrale supérieure (88) reliée à la première paroi latérale (58).

9. Accessoire cuiseur vapeur (104) selon l'une des revendications 1 à 8, **caractérisé en ce que** le réservoir d'eau (106) présente un fond (108) déversant vers l'entrée d'alimentation d'eau (121), le fond (108) étant formé par la paroi de fond (114).

10. Accessoire cuiseur vapeur (104) selon les revendications 3 et 9, **caractérisé en ce que** l'enceinte (100) comporte un organe de positionnement (681) s'étendant depuis la deuxième paroi latérale (68) et coopérant avec un organe de blocage (682) disposé sur le fond (108) du réservoir d'eau (106).

11. Accessoire cuiseur vapeur (104) selon l'une des revendications 1 à 10, **caractérisé en ce qu'**il comporte un couvercle (103) amovible délimitant au moins une partie de l'enceinte (100) et mobile entre une position ouverte de l'enceinte (100) et une position fermée de l'enceinte (100).

12. Cuiseur vapeur électrique (101), **caractérisé en ce qu'**il comporte un accessoire cuiseur vapeur (104) selon l'une des revendications 1 à 11, et un récipient (102) pour contenir les aliments à chauffer et/ou à cuire.

## Patentansprüche

1. Dampfgarzubehör (104) zum Erhitzen und/oder Dünsten von Lebensmitteln, die in einem Gefäß (102) enthalten sind, wobei das Dampfgarzubehör (104) einen Behälter (100) umfasst, der eine äußere Seitenwand (112) und eine Bodenwand (114) aufweist, einen Dampfgenerator (105), der konfiguriert ist, um dem Behälter (100) Dampf zuzuführen, wobei der Dampfgenerator (105) eine Dampferzeugungskammer (120) aufweist, die mit einem Dampfverteilungsausgang (115) verbunden ist, der in einem unteren Teil (110) des Dampfgenerators (105) eingerichtet ist, wobei der Behälter (100) einen Wasserspeicher (106) umfasst, der die Dampferzeugungskammer (120) umgibt und dieser über mindestens einen Wasserzufuhreingang (121) Wasser zuführt, wobei die Dampferzeugungskammer (120) mit einem Dampfablassausgang (122) kommuniziert, der höher als der Wasserzufuhreingang (121) angeordnet ist, wobei die Dampferzeugungskammer (120) eine Heizvorrichtung (150) umfasst, wobei der Behälter (100) eine erste Seitenwand (58) umfasst, die die Heizvorrichtung (150) umgibt und mindestens teilweise die Dampferzeugungskammer (120) begrenzt, **dadurch gekennzeichnet, dass** die erste Seitenwand (58) in Bezug auf die Heizvorrichtung (150) abnehmbar angebracht ist und dadurch, dass die erste Seitenwand (58) zwischen einer verriegelten Position, in der die erste Seitenwand (58) in Bezug auf die Heizvorrichtung (150) unbeweglich ist, und einer entriegelten Position, in der die erste Seitenwand (58) von der Heizvorrichtung (150) getrennt werden kann, drehbeweglich ist.

2. Dampfgarzubehör (104) nach Anspruch 1, **dadurch gekennzeichnet, dass** die erste Seitenwand (58) über einen Verschluss (8) getragen wird, der über eine BajonettVerbindung auf der Bodenwand (114) gehalten wird.

3. Dampfgarzubehör (104) nach Anspruch 2, **dadurch gekennzeichnet, dass** der Behälter (100) eine zweite Seitenwand (68) umfasst, die die erste Seitenwand (58) beabstandet zur äußeren Seitenwand (112) umgibt, wobei die zweite Seitenwand (68) über den Verschluss (8) getragen wird.

4. Dampfgarzubehör (104) nach Anspruch 3, **dadurch gekennzeichnet, dass** die zweite Seitenwand (68) in Bezug auf den Verschluss (8) abnehmbar angebracht ist.

5. Dampfgarzubehör (104) nach einem der Ansprüche 3 bis 4, **dadurch gekennzeichnet, dass** der Dampfablassausgang (122) über eine Leitung (125) mit dem Dampfverteilungsausgang (115) kommuniziert, wobei die erste Seitenwand (58) sich zwischen der Heizvorrichtung (150) und der Leitung (125) erstreckt, und dadurch, dass die zweite Seitenwand (68) die Leitung (125) umgibt.

6. Dampfgarzubehör (104) nach einem der Ansprüche 3 bis 5, **dadurch gekennzeichnet, dass** der Behälter (100) eine dritte Seitenwand (78) umfasst, die die zweite Seitenwand (68) umgibt, und dadurch, dass die dritte Seitenwand (78) eine Wasserzufuhröffnung (780) einrichtet, die den Wasserspeicher (106) und die Dampferzeugungskammer (120) verbindet.

7. Dampfgarzubehör (104) nach Anspruch 6, **dadurch gekennzeichnet, dass** die erste Seitenwand (58) und die dritte Seitenwand (78) aus einem einzigen Stück hergestellt sind.

8. Dampfgarzubehör (104) nach einem der Ansprüche 1 bis 7, **dadurch gekennzeichnet, dass** die Höhe der Dampferzeugungskammer (120) durch eine mittlere obere Wand (88), die mit der ersten Seitenwand (58) verbunden ist, begrenzt ist.

9. Dampfgarzubehör (104) nach einem der Ansprüche 1 bis 8, **dadurch gekennzeichnet, dass** der Wasserspeicher (106) einen Boden (108) aufweist, der zum Wasserzufuhreingang (121) hin abführt, wobei der Boden (108) von der Bodenwand (114) gebildet ist.

10. Dampfgarzubehör (104) nach einem der Ansprüche 3 bis 9, **dadurch gekennzeichnet, dass** der Behälter (100) ein Positionierungselement (681) umfasst, das sich ausgehend von der zweiten Seitenwand (68) erstreckt und mit einem Sperrelement (682) zusammenwirkt, das auf dem Boden (108) des Wasserspeichers (106) angeordnet ist.

11. Dampfgarzubehör (104) nach einem der Ansprüche 1 bis 10, **dadurch gekennzeichnet, dass** es einen abnehmbaren Deckel (103) umfasst, der mindestens einen Teil des Behälters (100) begrenzt und zwischen einer offenen Position des Behälters (100) und einer geschlossenen Position des Behälters (100) beweglich ist.

12. Elektrischer Dampfgarer (101), **dadurch gekennzeichnet, dass** er ein Dampfgarzubehör (104) nach einem der Ansprüche 1 bis 11 und ein Gefäß (102) zum Enthalten der zu erhitzenden und/oder zu kochenden Lebensmittel umfasst.

## Claims

1. Steam cooker accessory (104) for heating and/or steaming food contained in a container (102), the steam cooker accessory (104) comprising an enclosure (100) having an outer side wall (112) and a bottom wall (114), a steam generator (105) configured to supply steam to the enclosure (100), the steam generator (105) having a steam-generating chamber (120) connected to a steam distribution outlet (115) provided in a lower portion (110) of the steam generator (105), the enclosure (100) comprising a water tank (106) surrounding and supplying water to the steam-generating chamber (120) through at least one water supply inlet (121), the steam-generating chamber (120) communicating with a steam discharge outlet (122) arranged higher than the water supply inlet (121), the steam generating chamber (120) comprising a heating device (150), the enclosure (100) comprising a first side wall (58) surrounding the heating device (150) and at least partially delimiting the steam generating chamber (120), **characterized in that** the first side wall (58) is mounted so as to be removable from the heating device (150) and **in that** the first side wall (58) is mobile in rotation between a locked position wherein the first side wall (58) is immobile with respect to the heating device (150), and an unlocked position wherein the first side wall (58) can be separated from the heating device (150).

2. Steam cooker accessory (104) according to claim 1, **characterized in that** the first side wall (58) is carried by a plug (8) that is maintained on the bottom wall (114) by a bayonet connection.

3. Steam cooker accessory (104) according to claim 2, **characterized in that** the enclosure (100) comprises a second side wall (68) surrounding the first side wall (58) at a distance from the outer side wall (112), the second side wall (68) being carried by the plug (8).

4. Steam cooker accessory (104) according to claim 3, **characterized in that** the second side wall (68) is mounted so as to be removable from the plug (8).

5. Steam cooker accessory (104) according to one of claims 3 to 4, **characterized in that** the steam discharge outlet (122) communicates via a conduit (125) with the steam distribution outlet (115), the first side wall (58) extending between the heating device (150) and the conduit (125), and **in that** the second side wall (68) surrounds the conduit (125).

6. Steam cooker accessory (104) according to one of claims 3 to 5, **characterized in that** the enclosure (100) comprises a third side wall (78) surrounding the second side wall (68), and **in that** the third side wall (78) arranges a water supply opening (780) connecting the water tank (106) and the steam-generating chamber (120).

7. Steam cooker accessory (104) according to claim 6, **characterized in that** the first side wall (58) and the third side wall (78) are made in a single piece.

8. Steam cooker accessory (104) according to one of claims 1 to 7, **characterized in that** the steam-generating chamber (120) is delimited in height by an upper central wall (88) connected to the first side wall (58).

9. Steam cooker accessory (104) according to one of claims 1 to 8, **characterized in that** the water tank (106) has a bottom (108) discharging to the water supply inlet (121), the bottom (108) being formed by the bottom wall (114).

10. Steam cooker accessory (104) according to claims 3 and 9, **characterized in that** the enclosure (100) comprises a positioning member (681) extending from the second side wall (68) and cooperating with a blocking member (682) arranged on the bottom (108) of the water tank (106).

11. Steam cooker accessory (104) according to one of claims 1 to 10, **characterized in that** it comprises a removable cover (103) delimiting at least one portion of the enclosure (100) and mobile between an open position of the enclosure (100) and a closed position of the enclosure (100).

12. Electric steam cooker (101), **characterized in that** it comprises a steam cooker accessory (104) according to one of claims 1 to 11, and a container (102) for containing the food to be heated and/or cooked.
